# EUROPEAN PATENT SPECIFICATION

(11) **EP 1 108 510 B1**
(45) Date of publication and mention of the grant of the patent: **26.09.2007**
(21) Application number: 00939112.9
(22) Date of filing: 21.06.2000
(51) Int. Cl.: B29B 11/04

(54) **PRODUCTION METHOD AND DEVICE FOR JOINT RUBBER**
VERFAHREN UND GERÄT ZUR HERSTELLUNG EINES GUMMIVERBUNDS
PROCEDE ET DISPOSITIF DE PRODUCTION POUR MATIERE PLASTIQUE ASSEMBLEE

(30) Priority: 25.06.1999 JP 18079699; 08.06.2000 JP 2000171492
(43) Date of publication of application: 20.06.2001
(73) Proprietor: Bridgestone Corporation, Tokyo 104-0031 (JP)
(72) Inventor: OKAFUJI, Yukitaka Bridgestone Corporation, Chuo-ku, Tokyo 104-0031 (JP); NAGASHIMA, Shinichi Bridgestone Corporation, Chuo-ku, Tokyo 104-0031 (JP); NAGASAWA, Akihiro Bridgestone Corporation, Chuo-ku, Tokyo 104-0031 (JP); OGAWA, Yuichiro Bridgestone Corporation, Chuo-ku, Tokyo 104-0031 (JP)
(74) Representative: Whalley, Kevin
(86) International application number: PCT/JP2000/004053
(87) International publication number: WO 2001/000380

(56) References cited:
- EP-A- 0 698 479
- JP-A- 5 278 112
- JP-A- 6 320 627
- JP-B2- 61 008 770
- US-A- 3 904 457
- US-A- 5 195 411
- US-A- 5 882 457

## Description

### TECHNICAL FIELD

The present invention relates to a method and an apparatus for manufacturing various co-jointed rubbers made by co-jointing sheet form non-vulcanized rubber materials.

### BACKGROUND ART

As the structured products made by co-jointing the end portions of the sheet form non-vulcanized rubber materials, there are for example carcass ply, belt, and the like of the tire constituting members. They are manufactured in a tire manufacturing process by the steps of coating the steel wire or fiber cord with rubber using a calendar roll and extruding the product in a sheet form, and cutting the product with a cutter or the like in order to make sheet-form non-vulcanized rubber material, winding it onto a shaping drum, and co-jointing the top end with the rear end thereof. The products have the cylindrical configuration, and are provided for manufacturing crude tires.

In the meantime, the method for co-jointing the ends of the sheet form non-vulcanized rubber material can be roughly classified into two, i.e., a method for co-jointing the two end faces by mutually laying one on the other (overlapping conjugation method) and a method for co-jointing the two end faces by abutting them together (abutting conjugation method) .

In the case of the former method, namely, in the overlapping conjugation method, as the tensile strength acts in parallel with the co-jointed faces, the conjugation strength is sufficiently secured. However the overlapped portion has greater thickness and the thickness is not constant in the widthwise direction, so that the product has poor dimensional precision. Thus, there is a problem that, when such a product is used for a tire, the uniformity of the tire is lowered.

On the other hand, in the case of the latter method, namely, in the abutting co-jointing method, it is difficult to obtain uniform co-jointing over the whole width direction. In addition, as the tensile strength acts vertically to the co-jointed faces, there is a problem that sufficient conjugation strength is less easily obtained. However, when this drawback is overcome, uniform thickness can be obtained over the whole product in high dimensional precision. When such a product is used for the tire, the uniformity of the tire can be improved.

There have been made various proposals for the above abutting conjugation method. In Japanese Patent Application Publication Laid-Open No. 61-8770 made by the present applicant, there is proposed a co-jointing method of bringing the end faces of the sheet form non-vulcanized rubber materials into pressure contact with each other by a joint roller. However, in the case of this conjugation method, because the end faces to be co-jointed of the sheet form non-vulcanized rubber materials are brought into pressure contact with each other by a pair of opposed joint rollers, there are problems that the end faces are required to be of the predetermined configuration, and that the conjugation strength is not sufficient.

Further, in Japanese Patent Application Laid-open No. 3-256732, there is proposed to effect correction of the end faces in co-jointing the sheet form non-vulcanized rubber materials. In the disclosure, however, there is described only the method of manually co-jointing the front end portion with the rear end portion by winding the sheet form non-vulcanized rubber material on a shaping drum. Said method is problematic because it has poor work efficiency and difficulty in stably keeping the co-jointing strength at all times.

In EP-A-0,698,479 is disclosed also a method according to the preamble of claim 1.

An object of the present invention is to provide a co-jointed rubber manufacturing method and manufacturing apparatus that achieve excellent working efficiency and make it possible to secure high co-jointing precision and sufficient co-jointing strength by solving various conventional problems.

### DISCLOSURE OF THE INVENTION

The invention for attaining the object mentioned above is a method according to claim 1.

In this invention, in the first end face shaping step, the one end face and the other end face in the sheet form non-vulcanized rubber member are shaped into such a state that they can be mutually abutted. And, in the second end face co-jointing step, the one end face and the other end face are co-jointed by abutting on each other. Consequently, in the resulting co-jointed rubber, the co-jointing is performed in high efficiency, no gap is formed between the co-jointing faces, and high dimensional precision and sufficient co-jointing strength are secured.

A further embodiment is related manufacturing a co-jointed rubber which method comprises a first end face pressure contacting step for bringing the one end face into pressure contact with the other end face by moving joint rollers while rolling them on and along the contact portion between the one end face and the other end face in the abutted sheet form non-vulcanized rubber member, and a fusing step for fusing the pressure contact portion by applying ultrasonic wave to the pressure contact portion between the one end face and the other end face.

According to this further embodiment, in the end face pressure contact step, the one end face is abutted to the other end face. And, by rolling joint rollers on and along the contact portion, the contact portion is brought into pressure contact without forming a gap. Thereafter, in the fusing step, a ultrasonic wave is applied to the pressure contact portion that has been brought into pressure contact without forming a gap, the pressure contact portion is molten and thus uniformly fused to fix. Consequently, in the resulting co-jointed rubber, conjugation is performed in high efficiency, there is no gap in the abutted surface and high dimensional precision and sufficient conjugation strength are secured.

The invention addresses also an apparatus according to claim 13.

The measuring means in the end face shaping device measures the configuration of the one end face in the sheet form non-vulcanized rubber member. And, based on the measurement result obtained by the measuring means, the shaping means shapes the other end face in a manner so as to be able to be abutted on the one end face. The above end face co-jointing device abuts the one end face on the other end face to co-joint. As a result, co-jointed rubber having no gap between the conjugation faces and having high dimensional precision and sufficient conjugation strength is manufactured in high efficiency.

### BRIEF DESCRIPTION OF THE DRAWINGS

Fig. 1 is a view showing the steps from the manufacturing of a sheet form material to the shaping of the tire constituting member in one embodiment of the present invention.
Fig. 2 is a front elevation of the end face position correcting device showing its essential part.
Fig. 3 is a sectional view of the essential part of fig.2.
Fig. 4 is a front elevation of the cutter device.
Fig. 5A and Fig. 5B are the sectional views of the essential parts of the end face position correcting device to explain its work progress.
Fig. 6A is a view showing the cut front end face position of the sheet form material.
Fig. 6B is a view showing (a part of) the cut front end face position of the sheet form material.
Fig. 7 is a schematic front elevation of the end face pressure contact apparatus.
Fig. 8 is a plan view of the sheet form material and the joint unit.
Fig. 9 is a sectional view of the joint roller.
Fig. 10 is a schematic view of the shaping drum and the ultrasonic wave fusing apparatus.
Fig. 11 is a side view of the essential part of the ultrasonic wave fusing apparatus.
Fig. 12 is a schematic side view of the end face position correcting device and the conveyance device of another embodiment.
Fig. 13 is a sectional view of the essential part of the front hand and the rear hand.
Fig. 14 is an explanatory view illustrating the movement of the end face position correcting device in time lapse.
Fig. 15 is an explanatory view of the part continued from Fig. 14.
Fig. 16 is a sectional view showing an example of co-jointing at both ends of the carcass ply.
Fig. 17 is a sectional view showing the co-jointed state achieved by the joint rollers.
Fig. 18 is a sectional view showing the co-jointed state achieved by the ultrasonic wave fusing apparatus.

### BEST MODE FOR IMPLEMENTING THE INVENTION

In the first invention, the following modes are preferable.

One example is a mode in which the other end face in the aforementioned end face shaping step is an end face in the sheet form non-vulcanized rubber member, or an end face in other sheet form non-vulcanized rubber member.

In this mode, in the case in which the other end face is an end face in the sheet form non-Vulcanized rubber member, a ring shaped non-vulcanized rubber member, e.g., a carcass ply or a belt for tire is manufactured, and in the case of the other end face is an end face in another sheet form non-Vulcanized rubber member, a sheet form non-vulcanized rubber member or a large size rubber sheet is manufactured.

In another example of the mode, the aforementioned end face shaping step includes measuring the configuration of one end face in the sheet form non-vulcanized rubber member, shaping the one end face based on the measurement result, and shaping the other end face into the configuration that can be abutted to the one end face configuration.

In this mode, as the one end face and the other end face are shaped into the configurations that can be mutually abutted, no gap is formed between the co-jointed faces.

The measurement can be performed by using various sensors including displacement sensor, photo-sensor, camera, and the like.

In a yet another mode, the end face shaping step includes measuring the configuration of one end face in the sheet form non-vulcanized rubber member with a displacement sensor or a photo-sensor.

In this mode, because the configuration of the one end face is measured by using a displacement sensor or a photo-sensor, measurement can be made in a short time with good efficiency and accuracy.

In yet another mode, the end face shaping step includes measuring, in the width direction, the configuration of the one end face and/or the configuration of the other end face which intersect a longitudinal direction of the sheet form non-vulcanized rubber member and shaping the configuration of the one end face and/or the configuration of the other end face in a longitudinal direction based on the results of measurement.

In this mode, the sheet form non-vulcanized rubber member has longitudinal configuration, and the configuration of the one end face and/or the configuration of the other end face which intersect the longitudinal direction is shaped in the longitudinal direction, e.g., in a direction orthogonal to the longitudinal direction.

In yet another mode, an end face pressure contact step includes a step of moving joint rollers while rolling them on and along the contact portion between the one end face and the other end face and bringing the one end face into pressure contact with the other end face.

In this mode, as the end face co-jointing step is the end face pressure contact step, rolling movement is made on the contact portion between the abutted one end face and the other end face, and the one end face is brought into pressure contact with the other end face by the pressing force of the joint rollers that is moved on and along the contact portion. As a result, no gap is formed between the co-jointed faces.

In yet another mode, the end face co-jointing step includes a fusing step for fusing the pressure contact portions by applying ultrasonic wave to the contact portion between the abutted one end face and the other end face.

In this mode, because the end face co-jointing step is a fusing step, wherein the contact portion between the one end face and the other end face is molten by the heat generated by ultrasonic wave applied thereto and uniformly fused, the contact portion is uniform and continuous without any disconnection. Consequently, the co-jointed part has no gap and the co-jointed part shows excellent adhesive property. Accordingly, that the co-jointed rubber having high dimensional precision and sufficient conjugation strength is manufactured in high efficiency.

In yet another mode, the end face co-jointing step includes: an end face pressure contact step of moving joint rollers while rolling them on and along the contact portion between the abutted one end face and the other end face and bringing the one end face into pressure contact with the other end face; and a fusing step for fusing the pressure contact portion by applying ultrasonic wave to the contact portion between the one end face and the other end face.

According to this mode, the one end face and the other end face are brought into pressure contact with one another by the pressing force of the joint rollers to form a pressure contact portion having no gap. And, as the pressure contact portion is molten by heat generated by the ultrasonic wave applied thereto and uniformly fused, the contact portion is uniform and continuous without any disconnection. Consequently, the co-jointed rubber having excellent adhesive property of the pressure contact portion, high dimensional precision and sufficient conjugation strength is efficiently manufactured.

In yet another mode, the tensile strength of the resulting co-jointed rubber is 1.5 - 2.0 kgf.

In this mode, the resulting co-jointed rubber has sufficient conjugation strength especially as the tire constituting member, and is favorably used as the tire constituting member and the like.

In yet another mode, at least one of the end face shaping step and the conjugation step is carried out on a shaping drum.

In this mode, it is possible to carry out shaping simultaneously with the manufacture of the co-jointed rubber or immediately thereafter, thereby achieving excellent work efficiency.

In yet another mode, at least one of the end face shaping step and the co-jointing step is carried out under the condition in which the sheet form non-vulcanized rubber member is further wound, in the stacked manner, on other sheet form non-vulcanized rubber which has been wound on a shaping drum.

In this mode, as it is possible to carry out manufacture such that, after manufacturing one co-jointed rubber on the shaping drum, other co-jointed rubber is laminated on one co-jointed rubber. As a result, excellent working efficiency is obtained. In this mode, for example, manufacture is performed in a state where an inner liner co-jointed in a ring form is laminated with a be-carcass ply co-jointed in a ring form.

In the third invention above, the following modes are preferable.

One example of the modes is a mode in which the end face co-jointing device is provided with an end face pressure contact device for bringing the one end face into pressure contact with the other end face in the abutted state.

In this mode, as the one end face and the other end face in the abutted state are subjected to pressure contact under the pressure contact force of the end face pressure contact device, sufficient adhesion strength is attained at the contact portion between the one end face and the other end face.

As the end face pressure contact device, there can be listed, for example, a joint roller, a pressure roller, a pressure plate, etc.

In yet another mode, the end face pressure contact device is a joint roller which moves while rolling on and along the contact portion between the abutted one end face and the other end face, to bring the one end face into pressure contact with the other end face.

In this mode, the one end face and the other end face are brought into pressure contact with one another by the pressing force of the joint roller to form a pressure contact portion having no gap. The pressure contact portion is then molten by heat generated by the ultrasonic wave applied thereto and uniformly fused. Accordingly, the contact portion is uniform and continuous without any disconnection. Consequently, the co-jointed rubber having excellent adhesive property of the pressure contact portion, high dimensional precision and sufficient conjugation strength is efficiently manufactured.

In yet another mode, the end face conjugation device is provided with a fusing device for fusing the contact portion between the one end face and the other end face in the abutted State.

In this mode, as the abutted one end face and the other end face are molten by the heat generated by of the fusing device and fused, the contact portion between the one end face and the other end face is free of disconnection, uniform, and continuous, and is excellent in adhesion strength.

As the fusing device, there can be listed, for example, a ultrasonic wave generating device, a heater, a heating roller, a hating plate, etc.

In yet another mode, the fusing device is a ultrasonic wave generating device for applying a ultrasonic wave to the contact portion between the one end face and the other end face in the abutted state to fuse the contact portion.

In this mode, as the ultrasonic wave is applied to the contact portion between the one end face and the other end face, the pressure contact portion is molten by heat generated by the applied ultrasonic wave, and uniformly fused, the contact portion is uniform and continuous without any disconnection. Consequently, the co-jointed rubber having no gap in the co-jointed part, excellent adhesive property of the co-jointed part, high dimensional precision and sufficient conjugation strength is efficiently manufactured.

In yet another mode, the measurement means has a displacement sensor or a photo-sensor.

In this mode, as the configuration of the one end face is measured by the displacement sensor or the photo-sensor, measurement is made in good efficiency and accuracy in a relatively short time.

In yet another mode, the shaping means is capable of performing shaping by twisting the one end portion and/or the other end portion in a horizontal direction, by a predetermined amount, with respect to the sheet form non-vulcanized rubber member based on the measurement result measured by the measurement means, and also capable of performing shaping by displacing the same by a predetermined amount in a vertical direction with respect to the sheet form non-vulcanized rubber member. In addition, the mode is provided with: a pressing member which is capable of fixing the sheet form non-vulcanized rubber material and of moving up and down; a plurality of sliding plates provided in a widthwise direction along the side face of the pressing member and supported so as to be capable of moving up and down; and a clamp claw which is swingable and capable of clamping the sheet form non-vulcanized rubber member along with the sliding plate.

In this mode, the pressing member holds the sheet form non-vulcanized rubber member to fix. The one end portion and/or the other end portion in the sheet form non-vulcanized rubber member are clamped by the sliding plate supported along the side face of the pressing member and the clamping claw. The pressing member is movable up and down and is capable of shaping by twisting by a predetermined amount in the horizontal direction with respect to the sheet form non-vulcanized rubber member. The sheet form non-vulcanized rubber member is twisted by being rotated in a predetermined amount after being moved up and down, by which the one end portion and/or the other end portion are shaped. Further, as the plural sliding plates are supported in a widthwise direction along the side face of the pressing member in a manner to be freely movable up and down, the one end portion and/or the other end portion are further shaped by moving the desired sliding plate up and down.

In yet another mode, a shaping drum and a clamping means for clamping the one end face and/or the other end face of the sheet form non-vulcanized rubber member and moving it onto the shaping drum are provided.

In this mode, as it is possible to move a sheet form non-vulcanized rubber member by the clamping means onto the shaping drum, excellent work efficiency is resulted.

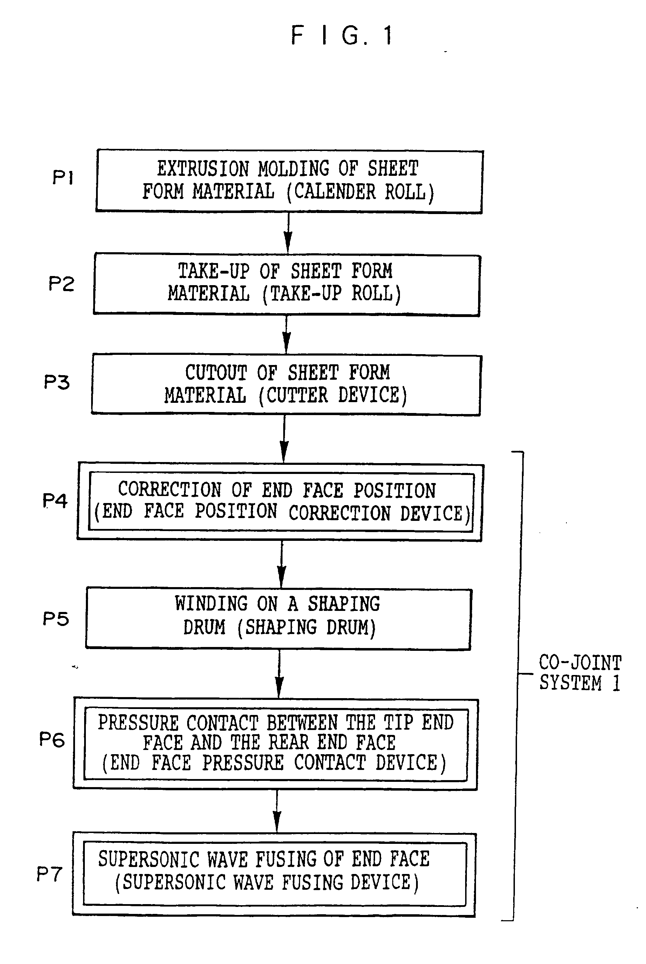

Hereinafter, an embodiment of the co-jointed rubber manufacturing method and the co-jointed rubber manufacturing apparatus will be described with reference to Fig. 1 through Fig. 11.

The co-jointed rubber manufacturing apparatus 1 according to this embodiment is an apparatus for manufacturing a tire constituting member (such as a carcass ply or a belt) by mutually abutting the top end to the rear end of a sheet form non-vulcanized rubber material 2 on a shaping drum 70.

The process steps from the manufacture of a sheet form non-vulcanized rubber material to the shaping of the tire constituting member are shown in Fig. 1.

A cord of steel wire or fiber is coated with non-vulcanized rubber by a calender roll and a sheet form material is extrusion molded (Process P1).

The extruded sheet form material is cut into a suitable length and taken up onto a take-up roll (Process 2).

The sheet form material taken up onto the take-up roll is suitably drawn out, sequentially cut with a cutter device to a predetermined length (Process P3).

An end face of a sheet form material whose top end and rear end has been cut is shaped by an end face shaping device so that the cut end face thereof is shaped in a direction intersecting the longitudinal direction (Process P4).

The sheet form material whose end face configuration has been shaped is wound around a shaping drum (Process P5) to have the top end face and the rear end face be opposed.

The top end face and the rear end face of the sheet form material are brought into pressure contact by an end face compressing device (Process P6).

Thereafter, the end faces that have been brought into pressure contact are molten under application of ultrasonic wave by a fusing device and fused together (Process P7).

For example, the steps from Process P4 to Process P7 can be performed by a co-jointed rubber manufacturing apparatus 1 provided with an end face shaping device 10, an end face pressure contact device 71 and a ultrasonic wave fusing device 100. With this co-jointed rubber manufacturing apparatus 1, there can be manufactured for example a tire constituting member.

Hereinafter, description is given on the co-jointed rubber manufacturing apparatus 1.

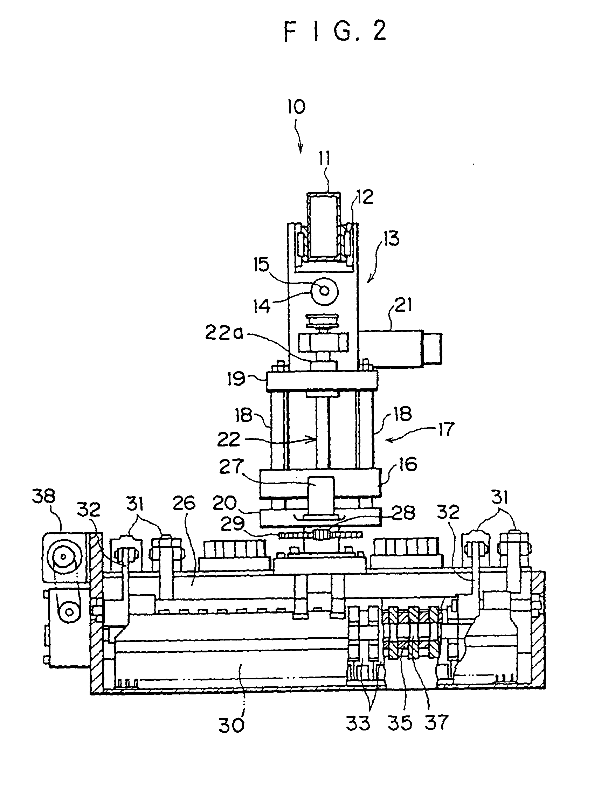

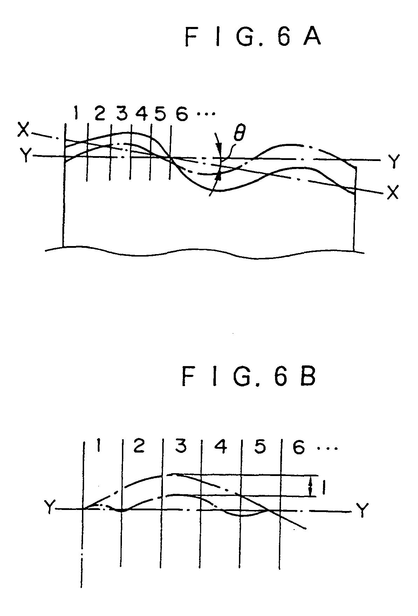

At first, description is given on the end face shaping device 10 with reference to Fig. 2 through Fig. 6A and Fig. 6B.

Fig. 2 is a front elevation of an end face shaping device 10 showing its essential part. The sheet form material 2 is disposed in a state of being extended in forward and backward directions (the directions orthogonal to the sheet face in Fig. 2). On both side faces of the beam member 11 disposed in forward and backward directions a guide rail 12 is horizontally fixed. The main frame 13 is engaged with the guide rail 12, in a manner to be freely movable forward and backward. The main frame 13 is in screw engagement with the screw shaft 15 in a state that the screw shaft 15 penetrates through the main frame 13 in forward and backward directions. When the screw shaft 15 is rotated, the main frame 13 can be moved forward and backward along with the nut member 14.

At the lower end portion of the main frame 13 a bracket 16 is provided so as to project forward. A lift frame 17 has a structure formed by connecting the upper and lower cross bars 19, 20 by the two sliding rods 18, 18. The lift frame 17 is disposed in a manner to be freely movable up and down with the sliding rods 18, 18 penetrating through the bracket 16. A screw shaft 22 rotates by being driven by the motor 21 mounted on the main frame 13. The screw shaft 22 is screw mated with the nut member 22a of the upper cross bar 19 in a manner that the screw shaft 22 penetrates through the nut member 22a in the vertical direction, and can move the lift frame 17 up and down by driving the motor 21.

With the lower part of the lift frame 17, an elongate pressing member 26 is connected in a horizontal direction in a manner to be revolvable in a horizontal plane. The pressing member 26 rotates through a pinion 28 and a sector gear 29 by the motor 27 provided on the underside cross bar 20.

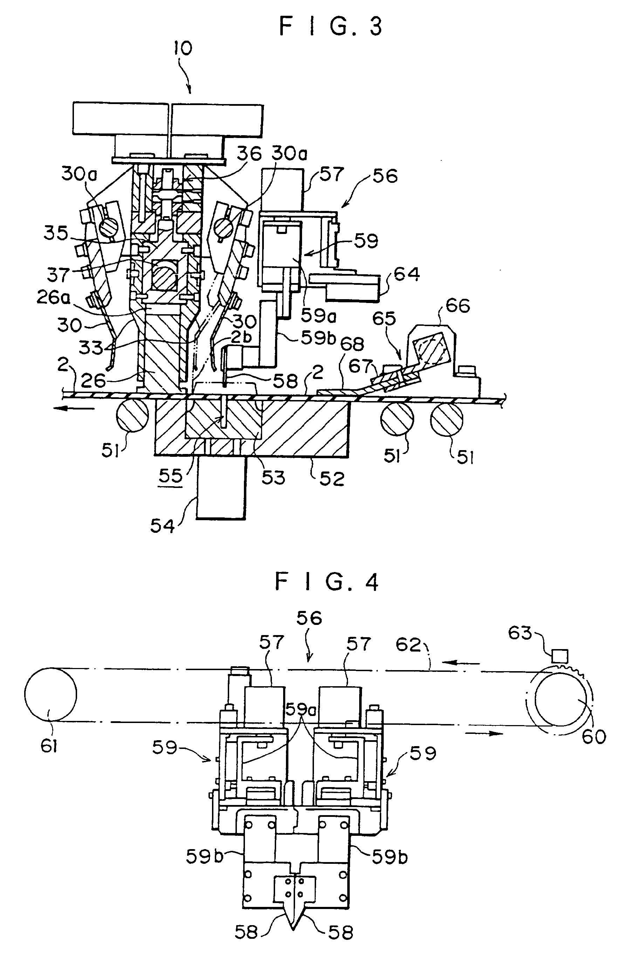

On the front and rear faces of the pressing member 26, there are disposed a plurality of sliding plates 33 in the longitudinal direction, in a manner that each plate is independently slidable up and down. As shown in the sectional view of Fig. 3, a block 35 engaged in a manner to be freely movable up and down in a window pore 26a, which penetrates through the pressing member 26 in forward and backward directions, connects the front and rear slide plates 33, 33 in one-piece. By driving the cylinder 36 provided on the upper part of the pressing member 26, the front and rear sliding plates 33, 33 can be moved up and down by way of the block 35.

The range of movements up and down of the sliding plates 33, 33 is controlled by the cam shaft 37 penetrating through the rectangular hole in the block 35.

The cam shaft 37 is rotated by a servo motor 38.

As shown in the sectional view of Fig. 3, opposite to the front and rear sliding plates 33, 33, respectively, the clamp claws 30, 30 are, at the upper portion thereof, engaged with the horizontal shafts 30a, 30a. The respective clamp claws 30, 30 can clamp the end portions of the sheet material 2 through such actions that the horizontal rotary shafts 30a, 30a are rotated by the driving means comprising the cylinders 31, 31 and the swinging arms 32, 32 connected therewith, the clamping claws 30, 30 show swinging movements independently of each other according to the rotation, thereby opening and closing the space between the sliding plates 33, 33.

The surfaces of the sliding plates 33, 33 are provided with the edging treatments for the purpose of providing slip-proof to the clamped sheet form material 2, and a plurality of slits are formed at the lower end edge of the clamping claws 30, 30.

As shown in Fig. 3, a receiving base 52 is disposed, in a state in which it is clamped by the front and rear rollers 51, 51, in the predetermined position in the carrying route of the roller 51 for carrying the sheet form material 2. In the right and left width directions of the receiving base 52, a bent member 53 is fit in an elongate concave portion 26 in a manner to be freely lifted up and down. When the cylinder 54 fixed to the bottom face of the receiving base 52 is driven, the bent member 53 moves up and down.

At the central part of the top face of the bent member 53 there is formed a cutter groove 55 oriented in the right and left directions.

With respect to the cutter device 56 disposed on the upstream side of the pressing member 26 and the clamping claws 30, 30 which lie before and after the pressing member, etc. as shown in Fig. 3 and Fig. 4, a timing belt 62 is bridged over between the pulleys 60, 61 which are disposed in the right and left sides, and the moving members 59, 59 bound to the upside running portion and the downside running portion, respectively, of the timing belt 62 are brought into contact with/ separate from each other in symmetric positions right and left by the rotation of the timing belt 62.

The amount of movements in the right and left width directions of the moving member 59 is measured by the sensor 63 for detecting the amount of rotation of the pulley 60.

The respective moving members 59, 59 have the lift members 59a, 59a which move up and down by the air cylinders 57, 57. The holding members 59b, 59b are supported by the lift members 59a, 59a in a manner that the holding members 59b,59b are allowed to make sliding movements in the longitudinal direction. A pair of cutter blades 58, 58 having symmetric configuration on the right and left sides are held in the vertically suspended manner on the holding members 59b, 59b.

The displacement sensors 64, 64 for detecting the displacements of the cutter blades 58, 58 in the forward and backward directions through the holding members 59b, 59b respectively are fixed to the lift members 59a, 59a.

In the cutter device 56 as above, as shown in Fig. 3 and Fig. 4, in the initial stage condition, the right and left cutter blades 58, 58 are in the condition of being in contact with each other at the central portion above the lower cutter groove 55. At the timing in which the predetermined amount of sheet material 2 has been carried striding over the cutter groove 55, the air cylinders 57, 57 are brought into operation to pierce the cutter blades 58, 58 into the sheet form material 2, followed by rotating the timing belt 62 to separate the cutter blades 58, 58 from each other, whereby the cutter blades 58, 58 are allowed to tear the sheet form material 2 in the right and left outward directions.

In such a case, the movement amounts of the cutter blades 58, 58 in the width (right and left) directions are detected by the sensor 63, and the displacement amounts of the cutter blades 58, 58 in the forward and backward directions are detected by the displacement sensors 64, 64.

Accordingly, the configuration of the cut face of the sheet form material 2 is measured simultaneously with the cutting.

On further upstream side of the cutter device 56, there is provided a deformation prevention means 65 as shown in Fig. 4.

The deformation preventive means 65 comprises a rigid plate 67 which swings with respect to the bearing 66 by the non-illustrated driving means and a leaf spring 68 fixed to the tip thereof . At the tip edge of the leaf spring 68 there are formed a plurality of slits.

By clamping the sheet form material 2 between the receiving base 52 and the leaf spring 68 by swinging the latter downward, the upstream side of the sheet form material 2 is fixed, and deformation of the sheet form material 2 during the cutting and the correction work is prevented.

In a case in which the end face configuration of the cut tip edge of the sheet form material 2, the end face configuration intersecting the longitudinal direction, is a wave form as in the curve shown in solid line in Fig. 6A,at the time when the sheet form material 2 is cut with the cutter device 56 and simultaneously the configuration of the cut face is measured, a straight line X - X proximate to the curve is firstly obtained by calculation to obtain an angle θ formed between the straight line X - X and the reference straight line Y - Y which is parallel to the horizontal line in the right and left and right width directions.

In the pose in which the pressing means 26 is oriented in the right and left width directions, the means 26 is moved to the position between the bent member 53 and the deformation preventing means 65, it is let down and the upstream side of the sheet form material 2 is pressed on the receiving base 52 with the tip end portion 2a of the sheet form material 2 remaining free.

At that time, the cutter device 56 is sheltered.

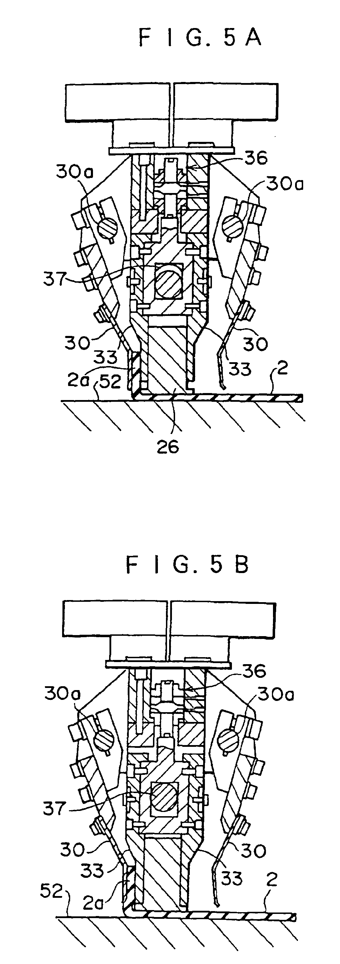

And, when the bent member 53 is projected upward from the receiving base 52, the tip portion 2a of the sheet form material 2 can be bent upward to bring it along the sliding plate 33, and the bent tip portion 2a can be held by the clamping claw 30 clamping the tip portion 2a between itself and the sliding plate 33 (ref. Fig. 5A). At any time other than this operation, the bent member 53 is in a condition of being lowered to the original position.

Thereafter, under the condition in which the leaf spring 68 which has so far pressed the sheet form material 2 is released and the pressing material 26 is held up to a certain extent together with the sheet form material 2 by the rise of the lift frame 17, the pressing member 26 is revolved by driving the motor 27 to twist the tip part 2a of the sheet material 2 and coincide the proximate straight line X - X in Fig. 6A to be substantially with the reference straight line Y - Y.

The revolving angle of the pressing material 26 is determined on the basis of the angle θ between the proximate straight line X - X and the reference straight line Y - Y obtained in advance.

By this twist shaping, the configuration of the tip edge of the sheet form material 2 is deformed from the curve shown in the solid line in Fig. 6A into the curve shown in the dashed line in the same, and shaped.

Next, only the sliding plate 33 corresponding to the particularly projected portion of the tip edge (in Fig. 6B, the portions numbered 2 to 4 from the left in order under equal division in the widthwise direction in Fig. 6B) are downwardly displaced within the control range, by the cam shaft 37 operated by the respective cylinders 36. As a result the end face configuration of the projected portion, along with the sliding plate 33 whose surface has been treated with the edging treatment, can be downwardly deformed only by the amount equal to the downwardly displacement, to shape the end face configuration.

In the case as shown in Fig. 6B, due to this partial shaping, the curve portions from No. 2 to No. 4 of the tip edge of the sheet form material 2 shown in the dashed line descend, by approximately the distance 1, and are deformed into the curve shown in the dashed line. In other words, the curve portions from No. 2 to No. 4 are deformed into the end face configuration running along the reference straight line Y - Y and thus shaped.

In this manner, the sheet form material 2 is shaped into the end face configuration in which the tip edge thereof substantially corresponds with the reference straight line Y - Y.

The sheet form material 2 whose tip edge is shaped is carried by a predetermined amount and cut with a cutter device 56, and after being cut, subjected to shaping of the end face configuration of the cut rear end edge.

Shaping of the end face configuration of the rear end edge is carried out by clamping the rear end portions 2b of the sheet form material 2 with the rear side sliding plate 33 and the clamp claw 30, as shown in the dashed line in Fig. 3. The rear end portion 2b is shaped into an end face configuration substantially corresponding with the reference straight line Y - Y by the twist shaping and the partial shaping for deforming in the direction intersecting the horizontal direction of the sheet form material 2 (vertical direction), in the same manner as in the case of the tip end edge.

As described above, the sheet form material 2 of the predetermined length in which the tip end edge and the rear end edge have been shaped in a state that they can be mutually abutted by the end face shaping device 10 is taken up on the shaping drum 70 and pressure contact between the tip end face and the rear end face of the process P6 is carried out by the end face pressure contact device 71.

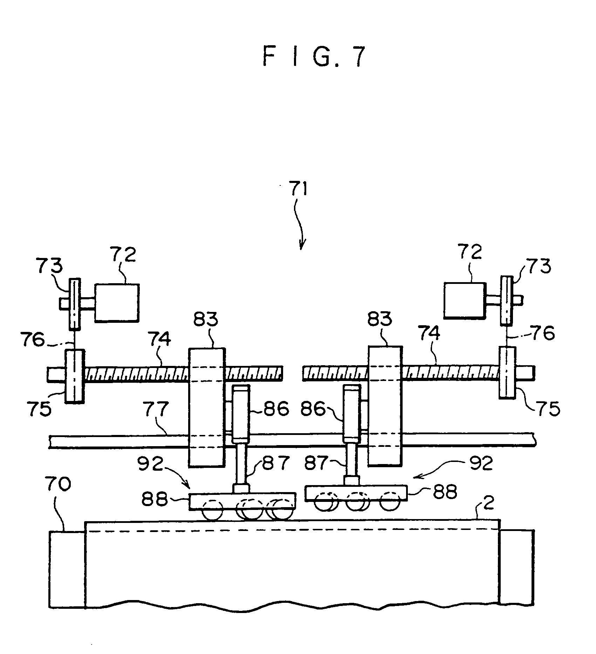

The end face pressure contact device 71 is constituted to have the right and left symmetric structure as illustrated in the schematic front view of Fig. 7. Therefore, brief description is made on the one side hereinafter.

A mounting bracket 83 is supported in slidable manner in the right and left widthwise directions in the guide rails 77 which are provided in parallel with the center axis of the shaping drum 70. The mounting bracket 83 is screwed to thrust through the screw shaft 74 which is parallel with the guide rail 77. When the motor 72 is driven, the screw shaft 74 is rotated through the belt 76 laid over the pulleys 73, 75, and the mounting bracket 83 shifts in the right and left directions guided by the guide rail 77.

The mounting bracket 83 is provided with a cylinder 86, and a rectangular frame 88 is fitted to the tip of the piston rod 87, projecting to the shaping drum 70 side, of the cylinder 86. These components constitute a joint unit 92.

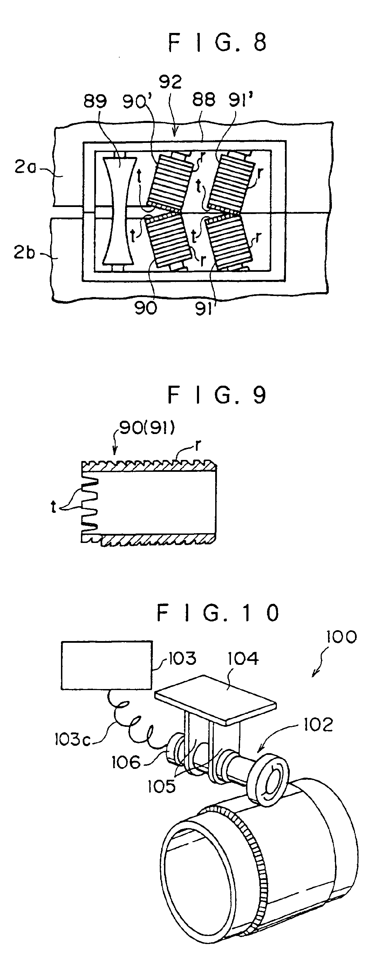

As shown in Fig. 8, on the rectangular frame 88, in the position closer to outside and between the front and rear side members, there is provided a pressing roller 89 of sandglass-like shape having the outer peripheral surface of a radius of curvature conforming to the surface configuration of the shaping drum 70 in a manner to be rotatable, and at the center and in the position closer to the inside, there are provided two pairs of the joint rollers 90, 90' and 91, 91'. The front joint roller 90' and the rear joint roller 90 form a pair, and the front joint roller 91' and the rear joint roller 91 form another pair, to constitute a joint unit 92.

Each of the joint rollers 90, 90'and 91, 90' is provided so that the front joint rollers 90, 90' are positioned symmetrical with respect to the joint line therebetween, the rear joint rollers 91, 91' are positioned symmetrical with respect to the joint line therebetween and the rotary shaft of each joint rollers is inclined by a cetain angle (e.g., 75°) with respect to the width direction of the sheet form material 2. The front and rear joint rollers 90, 90' of the one pair have the teeth t formed all over the circumferences of the open end edges on the mutually facing side thereof. The front and rear joint rollers 91, 91' of the other pair have the teeth t formed all over the circumferences of the open end edges on the mutually facing side thereof. The joint rollers 90, 90' are meshed with each other by the teeth thereof and the joint rollers 91, 91' are meshed with each other by the teeth thereof.

The joint rollers 90, 90' and 91, 91' have a plurality of saw-tooth shaped projecting ribs r in annular or spiral form in a manner to extend in a circumferential direction on its outer circumferential surface, and the sectional shapes of the projecting ribs r are inclined by 45 degrees with respect to the rotary axial line in the direction of alienating from the side of the teeth t, as illustrated in Fig. 9.

Two joint units 92 are provided as a pair symmetrically on the right and left sides, as shown in Fig. 7. The operation of the end face pressure contact process will be illustrated below.

On the shaping drum 70, a sheet form material 2 is wound and is arranged so that the front end face and the rear end face thereof are opposed to each other with a slight gap left therebetween.

The shaping drum 70 is rotated to dispose the right and left joint units 92, 92 along the seam of the sheet form material 2. After positioning the one joint unit 92 at approximately the center in the right and left width directions, the one joint unit 92 is lowered by driving the cylinder 86, such that shown in Fig. 8, a pressing roller 89 and the front and rear joint rollers 90, 90' and 91, 91' stride over the front end 2a of the sheet material 2 and the rear end portion 2b thereof to effect contact-pressing these portions.

And, when the joint unit 92 is moved in the width direction outer side by way of the mounting bracket 83 by the driving of the motor 72, the front end portion 2a and the rear end portion 2b of the sheet form material 2 is first pressed by the pressing roller 89, and then, by the action of rolling of the joint rollers 90, 90' and 91, whose rotary axial lines are inclined, the rotating projecting ribs r cause to bring the front end portion 2a and the rear end portion 2b near to each other in the mutually approaching directions, and continuously bring the front end face and the rear end face into pressure contact with each other.

When the one joint unit 92 has effected pressure contact by an appropriate distance from the central portion to the side portion, the other joint unit 92 is lowered to the central portion which has already been subjected to pressure contact and moved to the other side, so that the right and left joint units perform pressure contact operation simultaneously, thereby co-joint the front end face and the rear end face of the sheet form material 2.

As the shaping is carried out, in the previous end face shaping step, so that the front end face and the rear end face of the sheet form material 2 have the configuration substantially corresponding with the reference straight line Y - Y, in this end face pressure contact process, the front end face and the rear end face are abutted without any gap formed there between in the full width direction and reliably brought into pressure contact.

Next, an end face fusing step of Process P7 is performed to fuse the pressure-contacted end faces of the seat form material 2 with ultrasonic wave.

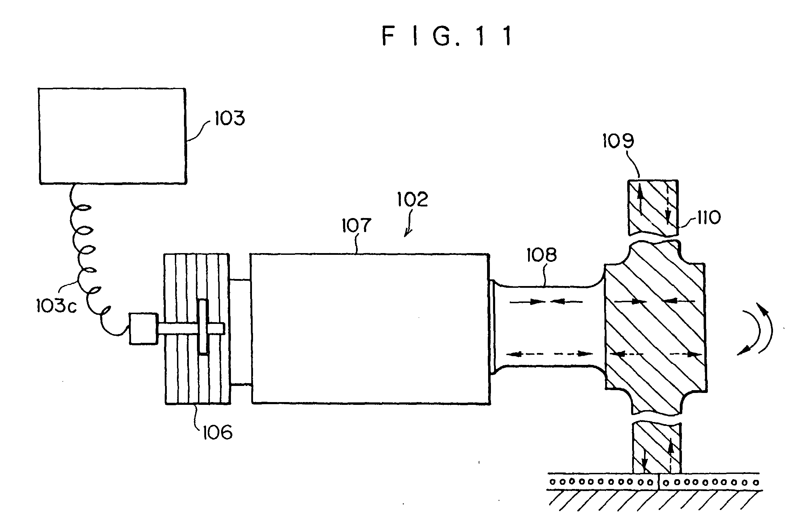

Fig. 10 and Fig. 11 show schematic views of a ultrasonic wave fusing apparatus 100.

The ultrasonic wave fusing apparatus 100 comprises a ultrasonic wave generating device 102, and a high frequency power-generating device 103 which supplies high frequency electric power to it. The ultrasonic wave generating device 102 is axially supported in a rotatable manner by a pair of bearing members 105 which are fixedly suspended downward on the clamping plate 104. High frequency electric power is supplied from the high frequency power-generating device 103 to a slip ring 106 provided at the rear part of the ultrasonic wave generating device 102, through a cable 103c.

The ultrasonic wave generating device 102 has a main body 107 internally containing a ultrasonic wave converter (e.g., a piezoelectric element), a slip ring 106 in the rear part of the body, a booster horn 108 firmly and mechanically connected to the front part, and an oscillator 109 firmly and mechanically connected to the front end of the booster horn 108. The ultrasonic wave generating device 102 applies a high frequency electric power from the slip ring 106 to a piezoelectric element of the ultrasonic wave converter to electrically oscillate a piezoelectric element and have the piezoelectric element generate a high frequency oscillation. Then, the high frequency oscillation is amplified in amplitude through the booster horn 108 to transfer it to the oscillator 109.

In the thick plate disk 110 of the oscillator 109, oscillation in an axial direction from the booster horn 108 is converted to the high frequency oscillation in a radial direction, and ultrasonic wave is radiated from the outer peripheral surface of the thick plate disk 110.

As the frequency of the ultrasonic wave, a range within 20 - 50 kHz is suitable.

The ultrasonic wave generator 102 is supported in a posture in which, as shown in Fig. 10, the outer peripheral surface of the thick plate disk 110 of the oscillator 109 presses the pressure-contacted joint of the sheet form material 2 wound on the shaping drum 70 and can move in rolling along the joint.

The pressing force of the oscillator 109 is to be 14 kgf, the high frequency output power of the high frequency power generating device 103 is to be 350 watts, and the frequency of the ultrasonic wave to be generated from the ultrasonic wave generator 102 is to be 40 kHz, under which state a thick plate disk 110 is moved while rolling along the joint at a moving speed of about 20 mm/sec. by automatic horizontal movement with a servo motor, from the end portion of the joint of the sheet form material 2.

The press-jointed front end face and the rear end face of the sheet form material 2 are mutually fused to be co-jointed by hot melting of rubber by the ultrasonic wave irradiation by the action of the oscillator 109.

In the above end face pressure contact step, the front end face and the rear end face of the sheet form material 2 are securely press-jointed without leaving any gap therein. Accordingly, it is possible to fuse to co-joint the end faces together reliably over the whole width direction by this ultrasonic wave fusing.

Here, it is easy to secure co-jointing strength (tensile strength) of 1.5 - 2.0 kgf, which is the sufficient strength as the tire constituting member such as a carcass ply.

As this process is a co-jointing by abutting, it has high co-jointing precision, and it is possible to improve the uniformity of the tire.

In the end face pressure contact step as described above, as the end face configuration is shaped by the end face shaping step that precedes the end face pressure contact step, the end face pressure contact work is performed reliably and smoothly. Also, in the fusing step, as the end faces are sufficiently brought into pressure contact by the aforementioned end face pressure contact step that precedes the fusing step, the fusing work by ultrasonic wave is performed reliably and smoothly. As a result, the work is performed adequately and in high efficiency.

In the foregoing embodiment, disclosure has been made on the co-jointing of the sheet form non-vulcanized rubber member for the tire constituting member. However, the present invention is not limited to the tire constituting member, and regardless of whether the cord is embedded in the rubber sheet or not, the invention process is applicable to the co-jointing of the sheet form non-vulcanized rubber members.

Combining any two of the aforementioned three steps of end face position correcting step, end face pressure contact step, and ultrasonic wave fusing step, will reliable achieve to the co-jointing strength of 1.5 - 2.0 kgf. Namely, it is possible to make combination of the end face shaping step with the end face pressure contact step, combination of the end face pressure contact step with the fusing step, combination of the end face shaping step with the fusing step, etc.

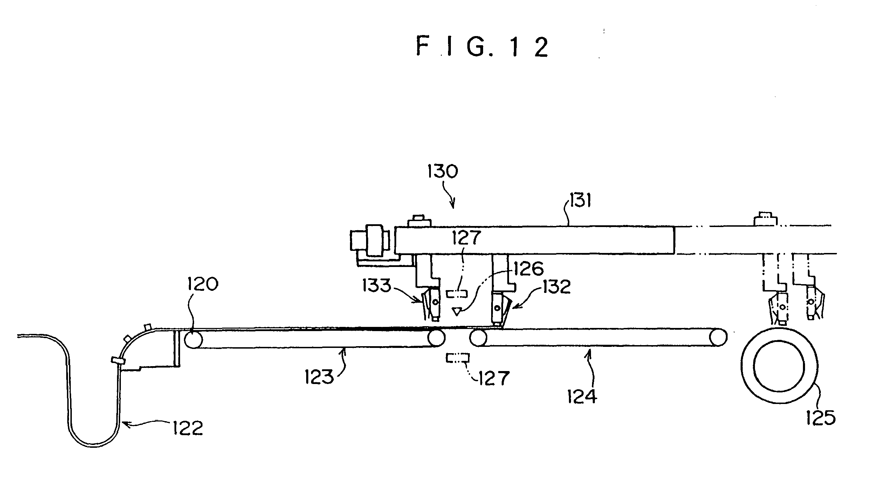

Next, another embodiment of the end face shaping process will be described with reference to Fig. 12 - Fig. 15.

In Fig. 12, a sheet form material 120 is conveyed from the take-up roll (not illustrated) by the belt conveyors 123, 124 by way of a festoon 122 to go to the shaping drum 125. In this process, the end face shaping device 130 carries out correction of the end face position of the sheet form material 120 on the belt conveyor 124 mainly from the down stream portion of the belt conveyor 123.

Between the two belt conveyors 123, 124, a cutter 126 which cuts the sheet form material 120 in a widthwise direction and a detection sensor 127 for optically detecting the configurations of the front end face and the rear end face of the cut sheet form material 120 are provided in freely providable manner according to necessity.

The end face position correcting device 130 is so constituted that a supporting rail 131 is laid mainly above the belt conveyor 124 in the zone from the belt conveyor 123 to the shaping drum 125, being oriented to the flow direction (front and back directions) of the sheet form material 120. On the supporting rail 131 a pair of front hand 132 and rear hand 133 are suspended in a manner to be slidable in the forward and backward directions independently of one another.

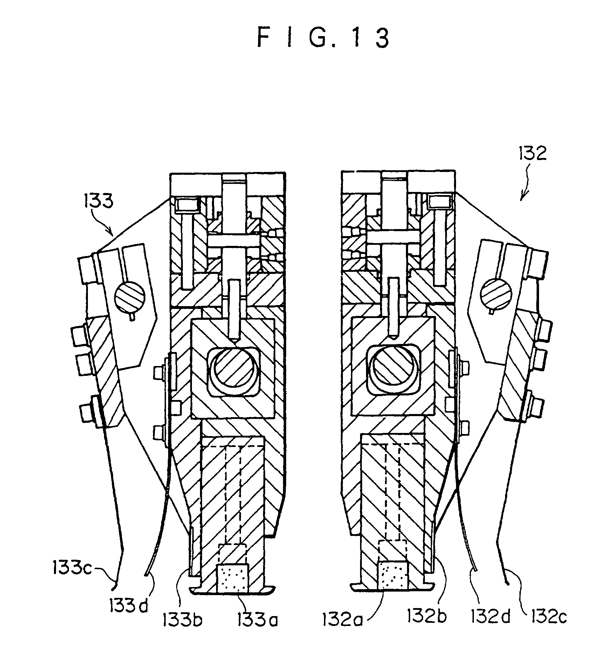

As shown in Fig. 13, the front hand 132 and the rear hand 133 are constituted symmetrical in the forward-backward direction, and each hand has the substantially the same structure as that of the end face shaping device 10 except that one crank claw 30 and the swing mechanism thereof of the opposed crank claws have been removed..

That is, the front hand 132 is so constituted that a plurality of sliding plates 132b are supported, in a manner to be lifted up and down, in the width direction along the downstream side face of the pressing member 132a, and a clamp claw 132c, by the swing movement, clamps the tip portion of the sheet form member 120 between the clamp claw 132c and the sliding plate 132b.

To each sliding plate 132b, there is fitted a rubber plate 132b, respectively. A clamp claw 132c reliably clamps the tip portion of the sheet material 120 between the clamp claw 132c and the sliding plate 132b by way of the rubber plate 132d, so that each portion clamped by the sliding plate 132b and the rubber plate 132d is allowed to be moved up and down independently in one-piece with the sliding plate 132b and the rubber plate 132d.

The rear hand 133 includes a pressing member 133a, sliding plates 133b, clamping claws 133c, rubber plates 133d, and is structured to be symmetrical with the front hand 132 in the forward-backward direction. The rear hand 133 is capable of reliably clamping the rear end portion of the sheet form material 120.

The front hand 132 and the rear hand 133 are constituted, in the same manner as in the end face shaping device 10, respectively, so that the pressing members 132a, 133a, etc. are capable of revolving in the horizontal plane.

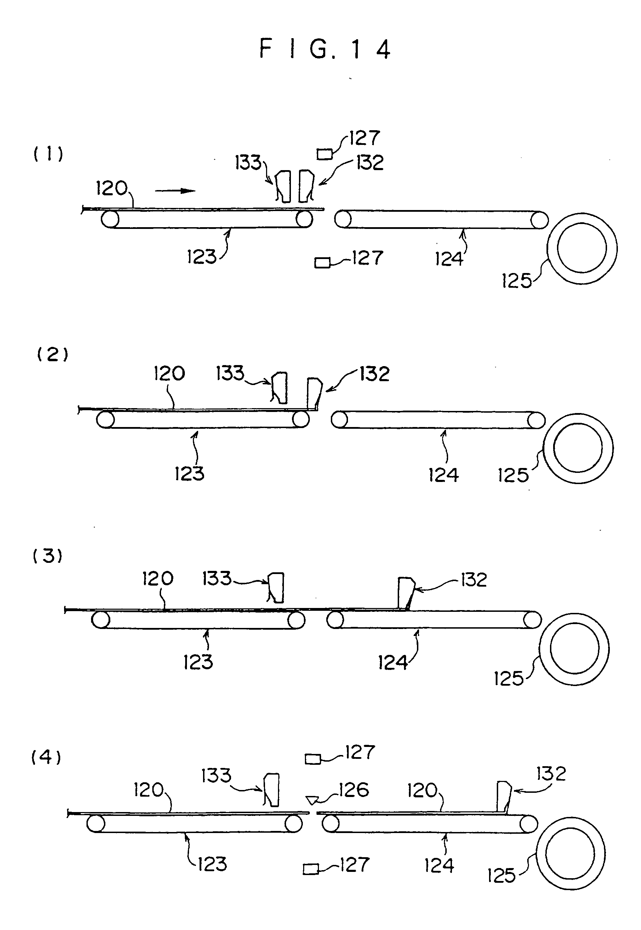

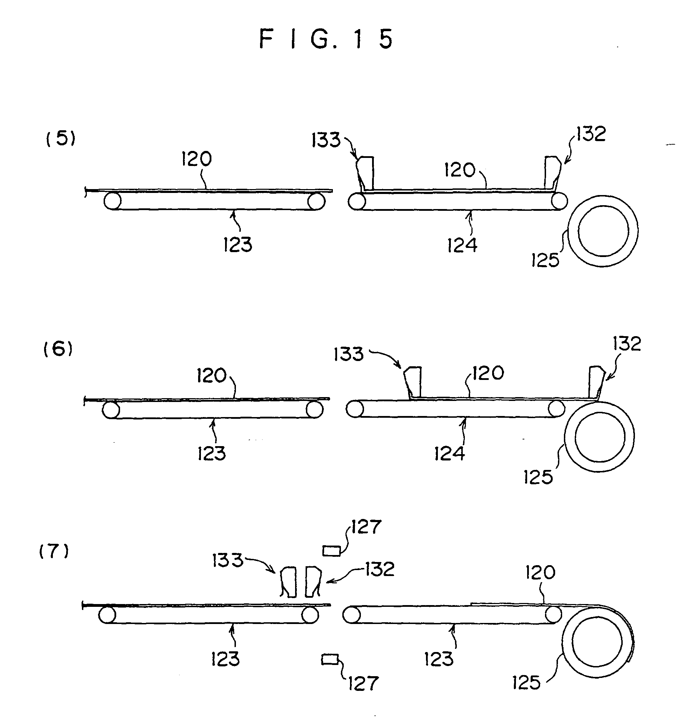

The end face shaping step and the carrying step by the end face shaping device 130 as described above will be sequentially explained based on Fig. 14 and Fig. 15.

Fig. 14 and Fig. 15 are the explanatory views showing, by means of the schematic views comprising the main elements only, the movements of the components in time.

At first, as shown in Fig. 14(1), the front hand 132 and the rear hand 133 are positioned at the home positions on the downstream portion of and above the belt conveyor 123. A sheet form material 120 is carried by the belt conveyor 123 while being centered, to bring the tip of the sheet form material 120 to be positioned between the belt conveyor 123 and the belt conveyor 124.

Here, the end face configuration of the tip of the sheet form material 120 is detected by the detection sensor 127.

And, the front hand 132 holds the tip of the sheet form material 120 at the predetermined position using the previously described bent member (not illustrated) or the like (ref. Fig. 14(2)).

The front hand 132 moves forward in the state of clamping the tip of the sheet form material 120, and carries the sheet form material 120 forward in a manner of drawing out as the belt conveyors 123, 124 are driven(ref. Fig. 14(3)).

At this time, if there is any portion that is largely projecting or depressed in the detected tip end face configurations, the required sliding plate 132b is lifted up and down on the belt conveyor 123 during movement to deform the related tip portion to shape.

If necessary, twist shaping by revolution of the pressing member 132a is performed.

The data of the tip face configuration are modified in accordance with the performed shaping (shaped portion, amount, etc.)

When the sheet form material 120 is drawn out by a predetermined amount and transferred, the conveyance is stopped, and the material is cut into a fixed length by the cutter 126 (ref. Fig. 14(4)).

And, the cutter 126 is retracted, the detection sensor 127 is moved to the predetermined position, and the end face configuration of the rear edge of the sheet form material 120 which has been cut into a fixed length and the end face configuration of the tip end of the other sheet form material 120 are detected by the detection sensor 127.

Next, the rear hand 133 is moved to clamp the rear end of the sheet form material 120 cut into a fixed length at the predetermined position (ref. Fig. 15(5)).

With the tip of the sheet form material 120 clamped by the front hand 132 and the rear end clamped by the rear hand 133, the sheet form material 120 which has been cut into a fixed length is transferred to the shaping drum 125 in collaboration with the driving of the belt conveyor 124 (ref. Fig. 15(6)).

In the course of this conveyance, the rear hand 133 which has clamped the rear end shapes the end face configuration of the rear end of the sheet form material 120.

That is, by comparing the data of the rear end face configuration with the data of the tip end face configuration, the rear hand 133 carries out a twist shaping by the revolution of the pressing member 133a and the partial shaping by the lifting up and down of the required sliding plate 133b, so as to make it possible to abut the tip end face configuration to the rear end face configuration.

And, the front hand 132 brings the tip end of the sheet form material 120 to the shaping drum 125, the rear hand 133 releases the rear end of the sheet form material 120, and by the driving of the belt conveyor 124 and the rotation of the shaping drum 125, the sheet form material 120 of a fixed length is wound on the circumference of the shaping drum 125 (ref. Fig. 15(7)).

The front hand 132 and the rear hand 133 return to the home positions.

Thereafter, in the sheet form material 120 of a fixed length wound around the shaping drum 125, the tip end face and the rear end face are co-jointed by the end face pressure contact device or the ultrasonic wave fusing device. Here, as the configuration of the rear end face of the sheet form material 120 has been shaped in conformity with the tip end face configuration, co-jointing is made with certainty in high dimensional precision.

In addition, as the shaping of the end face configuration is made while the material is transferred, the work efficiency is extremely high.

In this embodiment, shaping has been made in a manner that the tip end face configuration of the sheet form material 120 cut into a fixed length is matched with the rear end face configuration, but the shaping may be made by matching the tip end face configuration with the rear end face configuration, or the shaping may be made by having the tip end face configuration and the rear end face configuration meet the reference configuration, respectively.

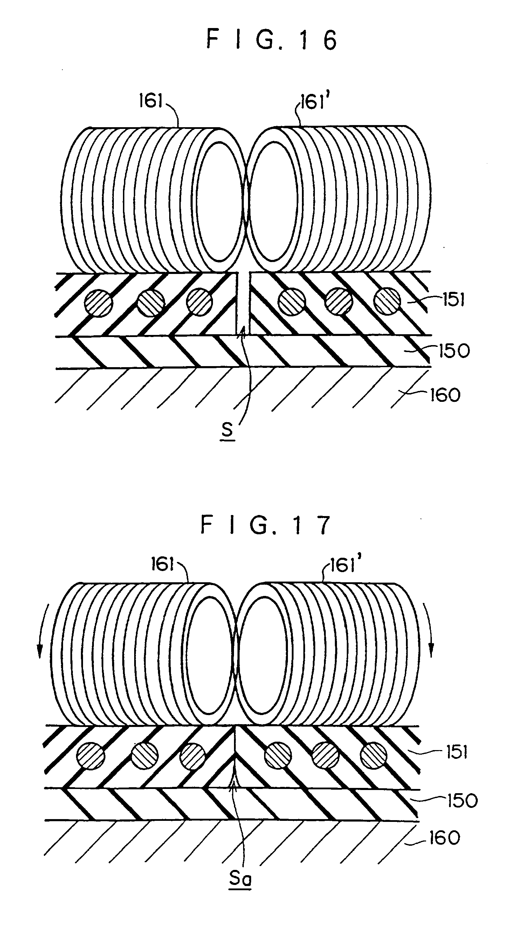

Next, with respect to the end face pressure contact step and the ultrasonic wave fusing step in another example, description will be given based on Fig. 16 to Fig. 18.

This is an example in which there are wound on the shaping drum 160 firstly an inner liner 150 which is a sheet form non-vulcanized rubber member, and a carcass ply 151 which is a sheet form non-vulcanized rubber member thereon, and the tip end and the rear end are co-jointed.

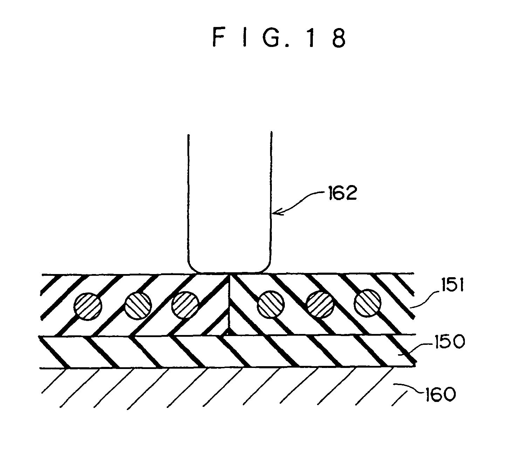

As shown in Fig. 16, in case a gap S is formed between the tip end face and the rear end face of the carcass ply 151 wound on the inner liner 150, by rolling paired joint rollers 161, 161' of the same type as described above, the tip end portion 151a and the rear end portion 151b are brought nearer to each other and continuously in pressure contact, by twisting, as shown in Fig. 17.

As the carcass ply 151 is in contact with the inner liner 150, the non-vulcanized rubber members mutually come into tight contact, and the lower layer parts of the tip end portion 151a and the rear end portion 151b of the carcass ply 151 are hard to move, and are difficult to be brought nearer to each other. Therefore, as shown in Fig. 17, there is a possibility that the end faces of the tip end portion 151a and the rear end portion 151 are mutually in contact in the upper layer part, but they cannot come into contact in the lower layer part, resulting in formation of a gap Sa.

However, when fusing is carried out by using a ultrasonic wave fusing device (specifically, by using the same oscillator 162 as the oscillator described above) in the next step as shown in Fib.18, the rubber is heated to fuse to fill the gap Sa by irradiation of the ultrasonic wave, thereby making it possible to co-joint the whole face of the two end faces.

As the oscillator 162 performs fusing of the pressure contact portion of the carcass ply 151 oriented in a widthwise direction while moving in a widthwise direction, the air in the gap Sa is subsequently driven out in the lateral direction and the gap Sa is subsequently filled up with the fused rubber. Thus, fusing and conjugation can be performed reliably.

Accordingly, it is possible to co-joint both ends of the carcass ply 151 in sufficient co-jointing strength with ease.

In the case of co-jointing both end faces by winding a sheet form non-vulcanized rubber member directly on the shaping drum, it there is a possibility that both end faces cannot reliably be co-jointed and may leave a space therebetween, a ultrasonic wave fusing may be provided to prevent formation of a gap and assure excellent co-jointing.

### INDUSTRIAL APPLICABILITY

According to this invention, it is possible to provide a co-jointed rubber manufacturing method and manufacturing apparatus that solve the conventional problems, achieve excellent working efficiency and make it possible to reliably obtain high co-jointing precision and sufficient co-jointing strength.

## Claims

1. A method for manufacturing co-jointed rubber comprising:
an end face shaping step for shaping one end (2a) face of a sheet form non-vulcanized rubber member (2) in a manner that the one end face can be abutted on the other end (2b) face of the sheet form non-vulcanized rubber member, and
an end face co-jointing step for mutually abutting the one end face on the other end face to effect co-jointing,
**characterised in that** the end face shaping step includes measuring the configuration of the one end face of the sheet form non-vulcanized rubber member; shaping, based on the result of measurement, the configuration of the one end (2a) face into an end face configuration in which the tip edge thereof substantially corresponds with a reference straight line (Y-Y); and shaping the other end (2b) face into a configuration that can be abutted on the configuration of the one end face.

2. A method as claimed in claim 1, wherein the other end (2b) face in the end face shaping step is an end face in the sheet form non-vulcanized rubber member, or an end face in other sheet form non-vulcanized rubber member.

3. A method as claimed in claim 1, wherein, in the end face shaping step, the configuration of one end (2a) face of the sheet form non-vulcanized rubber member (2) is measured by using a displacement sensor (64, 64), or a photo-sensor (127).

4. A method as claimed in claim 1, wherein the end face shaping step includes the steps of measuring over the widthwise direction of the rubber member (2) the configuration of the one (2a) end face and/or the configuration of the other end (2b) face of the sheet form non-vulcanized rubber member, the configurations intersecting in a longitudinal direction, and shaping in the longitudinal direction the configuration of the one end face and/or the configuration of the other end face based on the result of measurement.

5. A method as claimed in claim 1, wherein the end face shaping step further includes the steps of twisting the one end (2a) face and/or the other end (2b) face of the sheet form non-vulcanized rubber member (2) in the widthwise direction with respect to the sheet form non-vulcanized rubber member, by a predetermined amount, based on the result of measurement, and displacing a portion of the one end (2a) face and/or a portion of the other end (2b) face in the vertical direction with respect to the rest of the end portion(s), by a predetermined amount, based on the result of measurement.

6. A method as claimed in claim 1, wherein the end face co-jointing step is the end face pressure contact step of moving joint rollers (90, 90', 91, 91') while rolling the joint rollers on and along the contact portion between the one end (2a) face and the other end (2b) face in the abutted state and bringing the one end face into pressure contact with the other end face.

7. A method as claimed in claim 1, wherein the end face conjugation step is a fusing step of applying an ultrasonic wave to the contact portion between the one end (2a) face and the other end (2b) face in the abutted state and having the contact portion fused.

8. A method as claimed in claim 1, wherein the end face conjugation step comprises: an end face pressure contact step of moving joint rollers (90, 90', 91, 91') while rolling the joint rollers on and along the contact portion between the one end (2a) face and the other end (2b) face in the abutted state and bringing the one end face into pressure contact with the other end face; and a fusing step of applying an ultrasonic wave to the pressure contact portion between the one end face and the other end face and having contact portion fused.

9. A method as claimed in any of claims 1 to 8, wherein the tensile strength of the co-jointed rubber is 1.5 - 2.0 kgf.

10. A method as claimed in any of claims 1 to 8, wherein at least one of the end face shaping step and the co-jointing step is performed on a shaping drum (70).

11. A method as claimed in any of claims 1 to 8, wherein at least one of the end face shaping step and the conjugation step is performed in a condition in which the sheet form non-vulcanized rubber member (2) is further wound, in a stacked manner, on other sheet form non-vulcanized rubber which has been wound on a shaping drum (70).

12. A method as claimed in claim 1, further comprising:
an end face pressure contact step of moving joint roller (90, 90', 91, 91') while rolling the joint rollers on and along the contact portion between one end (2a) face and the other end (2b) face in the abutted state of a sheet form non-vulcanized rubber member (2) and bringing the one end face into pressure contact with the other end face; and
a fusing step for fusing a pressure contact portion between the one end face and the other end face by applying ultrasonic wave to the contact portion.

13. A co-jointed rubber manufacturing apparatus comprising:
an end face shaping device (10) having measuring means for measuring the configuration of one end (2a) face of a sheet form non-vulcanized rubber member (2), a shaping means for shaping **characterised by** shaping and an end face co-jointing device (71) for mutually abutting the one end face on the other end face to conjugate, based on the result of measurement, the configuration of the one end face into an end face configuration in which the tip edge thereof substantially corresponds with a reference straight line (Y-Y), and shaping the other end (2b) face into a configuration that can be abutted on the configuration of the one end face.

14. Apparatus as claimed in claim 13, wherein the end face co-jointing device (71) is provided with an end face pressure contact device (71) which brings the one end face into pressure contact with the other end face.

15. Apparatus as claimed in claim 14, wherein the end face pressure contact device (71) is a joint roller (90, 90', 91, 91') which moves while rolling the contact device on and along the contact portion between the one end (2a) face and the other end (2b) face in the abutted state, so as to bring the one end face into pressure contact with the other end face.

16. Apparatus as claimed in claim 13, wherein the end face co-jointing device (71) is provided with a fusing device (100) for fusing the contact portion between the one end (2a) face and the other end (2b) face in the abutted state.

17. Apparatus as claimed in claim 16, wherein the fusing device (100) is a ultrasonic wave generating device (100) for applying an ultrasonic wave to the contact portion between the one end (2a) face and the other end (2b) face in the abutted state, to fuse the contact portion.

18. Apparatus as claimed in any of claims 13 to 17, wherein the measurement means has a displacement sensor (64, 64) or a photo-sensor (127).

19. Apparatus as claimed in any of claims 13 to 17, wherein the shaping means is capable of performing shaping by twisting the one end portion (2a) and/or the other end portion (2b) of the sheet form non-vulcanized rubber member (2) in the widthwise direction of the end faces with respect to the sheet form non-vulcanized rubber member, by a predetermined amount, based on the measurement result measured by the measurement means, and also capable of shaping by displacing the same by a predetermined amount in a vertical direction to the sheet form non-vulcanized rubber member, and
the shaping means is provided with: a pressing member (26, 53) which is capable of fixing the sheet form non-vulcanized rubber member and of making moving up/down movement, a plurality of sliding plates (33) supported in a widthwise direction along the side face of the pressing member, so that the slide plate can be moved up/down, and a clamp claw (30) which is swingable and capable of clamping the sheet form non-vulcanized rubber member in collaboration with the sliding plate.

20. Apparatus as claimed in any of claims 13 to 17, further comprising: a shaping drum (70); and a clamping means (132, 133) for clamping the one end (2a) face and/or the other end (2b) face of the sheet form non-vulcanized rubber member (2) and moving the rubber member onto the shaping drum.

## Patentansprüche

1. Verfahren zur Herstellung eines Gummiverbundes, umfassend:
einen endseitigen Formschritt zum Formen einer Stirnfläche (2a) eines blattförmigen, nicht vulkanisierten Gummibauteils (2) in einer Art, dass die eine Stirnfläche an die andere Stirnfläche (2b) des blattförmigen, nicht vulkanisierten Gummibauteils angrenzen kann, und
ein endseitiger Verbindungsschritt zum gegenseitigen Aneinanderstoßen der einen Stirnfläche auf der anderen Stirnfläche, um Verbindung zu bewirken,
**dadurch gekennzeichnet, dass** der endseitige Formschritt einschließt Messen der Konfiguration der einen Stirnfläche des blattförmigen, nicht vulkanisierten Gummibauteils; aufgrund des Messergebnisses Formen der Konfiguration der einen Stirnfläche (2a) in eine Stirnflächenkonfiguration, in welcher der obere Rand davon im Wesentlichen einer geraden Referenzlinie (Y-Y) entspricht; und Formen der anderen Stirnfläche (2b) zu einer Konfiguration, die an die Konfiguration der anderen Stirnfläche angrenzen kann.

2. Verfahren nach Anspruch 1, bei welchem die andere Stirnfläche (2b) in dem Stirnflächenformschritt eine Stirnfläche ist in dem blattförmigen, nicht vulkanisierten Gummibauteil oder eine Stirnfläche in einem anderen blattförmigen, nicht vulkanisierten Gummibauteil.

3. Verfahren nach Anspruch 1, bei welchem in dem Stirnflächenformschritt die Konfiguration einer Stirnfläche (2a) des blattförmigen, nicht vulkanisierten Gummibauteils (2) gemessen wird unter Verwendung eines Versetzungssensors (64, 64) oder eines Fotosensors (127).

4. Verfahren nach Anspruch 1, bei welchem der Stirnflächenformschritt einschließt die Messschritte über die Richtung in der Breite des Gummibauteils (2) der Konfiguration der einen Stirnfläche (2a) und/oder die Konfiguration der anderen Stirnfläche (2b) des blattförmigen, nicht vulkanisierten Gummibauteils, wobei die Konfigurationen in einer längsgerichteten Richtung sich überschneiden, und Formen in der längsgerichteten Richtung der Konfiguration der einen Stirnfläche und/oder der Konfiguration der anderen Stirnfläche aufgrund des Messergebnisses.

5. Verfahren nach Anspruch 1, bei welchem der Stirnflächenformschritt weiterhin einschließt die Drehschritte der einen Stirnfläche (2a) und/oder der anderen Stirnfläche (2b) des blattförmigen, nicht vulkanisierten Gummibauteils (2) in der Richtung der Breite nach in Bezug zu dem blattförmigen, nicht vulkanisierten Gummibauteil, um ein vorher festgelegtes auf dem Messergebnis basierendes Ausmaß, und Versetzen eines Abschnittes der einen Stirnfläche (2a) und/oder eines Abschnittes der anderen Stirnfläche (2b) in der vertikalen Richtung in Bezug zu dem Rest der Endabschnitt(e) um ein vorher festgelegtes auf dem Messergebnis basierendes Ausmaß.

6. Verfahren nach Anspruch 1, bei welchem der Stimflächen-Verbindungsschritt der Stirnflächendruckkontaktschritt beweglicher Verbindungsrollen (90, 90', 91, 91') ist, in dem die Verbindungsrollen auf und entlang des Kontaktabschnittes zwischen der einen Stirnfläche (2a) und der anderen Stirnfläche (2b) in dem angrenzenden Zustand walzen, und die eine Stirnfläche in Druckkontakt mit der anderen Stirnfläche bringen.

7. Verfahren nach Anspruch 1, bei welchem der Stirnflächen-Konjugationsschritt ein Verschmelzungsschritt ist unter Anwendung einer Ultraschallwelle auf den Kontaktabschnitt zwischen der einen Stirnfläche (2a) und der anderen Stirnfläche (2b) in dem angrenzenden Zustand, wobei der Kontaktabschnitt verschmolzen wird.

8. Verfahren nach Anspruch 1, bei welchem der Stirnflächen-Konjugationsschritt umfasst: einen Stirnflächendruckkontaktschritt mit beweglichen Verbindungsrollen (90, 90', 91, 91'), in dem die Verbindungsrollen auf und entlang des Kontaktabschnittes zwischen der einen Stirnfläche (2a) und der anderen Stirnfläche (2b) in dem angrenzenden Zustand walzen, und die eine Stirnfläche in Druckkontakt mit der anderen Stirnfläche bringen; und einen Verschmelzungsschritt unter Anwendung von Ultraschall auf dem Druckkontaktabschnitt zwischen der einen Stirnfläche und der anderen Stirnfläche, wobei der Kontaktabschnitt verschmolzen wird.

9. Verfahren nach irgendeinem der Ansprüche 1 bis 8, bei welchem die Zugfestigkeit von dem Gummiband 1,5-2.0 kgf beträgt.

10. Verfahren nach irgendeinem der Ansprüche 1 bis 8, bei welchem zumindest einer des Stirnflächenformschrittes und des Verbindungsschrittes auf einem Formzylinder (70) durchgeführt wird.

11. Verfahren nach irgendeinem der Ansprüche 1 bis 8, bei welchem zumindest einer des Stirnflächenformschrittes und des Konjugationsschrittes durchgeführt wird unter einer Bedingung, in welcher das blattförmige, nicht vulkanisierte Gummibauteil (2) weiter gedreht wird, in einer aufgeschichteten Art, auf andere blattförmige, nicht vulkanisierte Gummis, welche auf einen Formzylinder (70) gewickelt sind.

12. Verfahren nach Anspruch 1, weiterhin umfassend:
einen Stirnflächendruckkontaktschritt mit beweglichen Verbindungsrollen (90, 90', 91, 91'), in dem die Verbindungsrollen auf und entlang des Kontaktabschnittes zwischen der einen Stirnfläche (2a) und der anderen Stirnfläche (2b) in dem angrenzenden Zustand eines blattförmigen, nicht vulkanisierten Gummibauteils (2) walzen, und die eine Stirnfläche in Druckkontakt mit der anderen Stirnfläche bringen; und
einen Verschmelzungsschritt zum Verschmelzen eines Druckkontaktabschnitts zwischen der einen Stirnfläche und der anderen Stirnfläche unter Anwendung von Ultraschall auf den Kontaktabschnitt.

13. Eine Gummiverbund-Herstellungsvorrichtung, umfassend:
ein Stirnflächenformgerät (10) mit Messmitteln zum Messen der Konfiguration der einen Stirnfläche (2a) eines blattförmigen, nicht vulkanisierten Gummibauteils (2), ein Formmittel zum Formen und ein Stirnflächen-Verbindungsgerät (71) zum gegenseitigen Angrenzen der einen Stirnfläche an die andere Stirnfläche zum Konjugieren, **gekennzeichnet durch** Formen aufgrund des Messergebnisses, wobei die Konfiguration der einen Stirnfläche in eine Stirnflächenkonfiguration, in welcher der obere Rand davon im Wesentlichen einer geraden Referenzlinie (Y-Y) entspricht, und Formen der anderen Stirnfläche (2b) zu einer Konfiguration, die an die Konfiguration der anderen Stirnfläche angrenzen kann.

14. Vorrichtung nach Anspruch 13, bei welcher das Stirnflächen-Verbindungsgerät (71) ausgestattet ist mit einem Stirnflächendruckkontaktgerät (71), welches die eine Stirnfläche in Druckkontakt mit der anderen Stirnfläche bringt.

15. Vorrichtung nach Anspruch 14, bei welcher das Stirnflächendruckkontaktgerät (71) eine Verbindungsrolle (90, 90', 91, 91') ist, welche sich bewegt, während das Kontaktgerät auf und entlang dem Kontaktabschnitt zwischen der einen Stirnfläche (2a) und der anderen Stirnfläche (2b) in dem angrenzenden Zustand walzt, um die eine Stirnfläche in Druckkontakt mit der anderen Stirnfläche zu bringen.

16. Vorrichtung nach Anspruch 13, bei welcher das Stirnflächen-Verbindungsgerät (71) ausgestattet ist mit einem Verschmelzungsgerät (100) zum Verschmelzen des Kontaktabschnitts zwischen der einen Stirnfläche (2a) und der anderen Stirnfläche (2b) in dem angrenzenden Zustand.

17. Vorrichtung nach Anspruch 16, bei welcher das Verschmelzungsgerät (100) ein Ultraschallwellen-erzeugendes Gerät (100) ist zum Anwenden einer Ultraschallwelle auf dem Kontaktabschnitt zwischen der einen Stirnfläche (2a) und der anderen Stirnfläche (2b) in dem angrenzenden Zustand, um den Kontaktabschnitt zu verschmelzen.

18. Vorrichtung nach irgendeinem der Ansprüche 13 bis 17, bei welcher das Messmittel einen Versetzungssensor (64, 64) oder einen Fotosensor (127) aufweist.

19. Vorrichtung nach irgendeinem der Ansprüche 13 bis 17, bei welcher das Formmittel in der Lage ist, Formen auszuführen durch Drehen des einen Endabschnitts (2a) und/oder des anderen Endabschnitts (2b) des blattförmigen, nicht vulkanisierten Gummibauteils (2) in der Richtung der Breite nach der Stirnflächen in Bezug zu dem blattförmigen, nicht vulkanisierten Gummibauteil um ein vorher festgelegtes Ausmaß, aufgrund des durch das Messmittel gemessenen Messergebnisses, und ebenso in der Lage zu formen durch Versetzen desselben um ein vorher festgelegtes Ausmaß in eine vertikale Richtung zu dem blattförmigen, nicht vulkanisierten Gummibauteil, und
das Formmittel ausgestattet ist mit: einem Pressbauteil (26, 53), welches in der Lage ist, das blattförmige, nicht vulkanisierte Gummibauteil zu fixieren und Auf/Abbewegung zu erzeugen, eine Vielzahl von Gleitplatten (33), die in einer Richtung der Breite nach gelagert sind entlang der Seitenfläche des Pressbauteils, so dass die Gleitplatte auf/abwärts bewegt werden kann, und eine Klemmklaue (30), welche schwingbar ist und fähig, das blattförmige, nicht vulkanisierte Gummibauteil in Zusammenarbeit mit der Gleitplatte zu klemmen.

20. Vorrichtung nach irgendeinem der Ansprüche 13 bis 17, weiterhin umfassend: einen Formzylinder (70) und ein Klemmmittel (132, 133) zum Klemmen der einen Stirnfläche (2a) und/oder der anderen Stirnfläche (2b) des blattförmigen, nicht vulkanisierten Gummibauteils (2) und Verschieben des Gummibauteils auf den Formzylinder.

## Revendications

1. Procédé de fabrication de caoutchouc coassemblé comprenant :
une étape de mise en forme de faces d'extrémités destinée à former la face d'une première extrémité (2a) d'un élément de caoutchouc non vulcanisé en forme de feuille (2) d'une manière telle que la face de la première extrémité puisse être mise en butée sur la face de l'autre extrémité (2b) de l'élément de caoutchouc non vulcanisé en forme de feuille, et
une étape de coassemblage de faces d'extrémités destinée à mettre mutuellement en butée la face de la première extrémité sur la face de l'autre extrémité pour effectuer un coassemblage,
**caractérisé en ce que** l'étape de mise en forme de face d'extrémités comprend la mesure de la configuration de la face de la première extrémité de l'élément de caoutchouc non vulcanisé en forme de feuille, la mise en forme, sur la base du résultat de la mesure, de la configuration de la face de la première extrémité (2a) en une configuration de face d'extrémité dans laquelle son bord de bout correspond pratiquement à une ligne droite de référence (Y-Y), et la mise en forme de la face de l'autre extrémité (2b) dans une configuration qui peut être mise en butée sur la configuration de la face de la première extrémité.

2. Procédé selon la revendication 1, dans lequel la face de l'autre extrémité (2b) dans l'étape de mise en forme de faces d'extrémités est une face d'extrémité dans l'élément de caoutchouc non vulcanisé en forme de feuille, ou bien une face d'extrémité dans un autre élément de caoutchouc non vulcanisé en forme de feuille.

3. Procédé selon la revendication 1, dans lequel, dans l'étape de mise en forme de faces d'extrémités, la configuration de la face de la première extrémité (2a) de l'élément de caoutchouc non vulcanisé en forme de feuille (2) est mesurée en utilisant un capteur de déplacement (64, 64) ou un photocapteur (127).

4. Procédé selon la revendication 1, dans lequel l'étape de mise en forme de faces d'extrémités comprend les étapes consistant à mesurer sur la direction de la largeur de l'élément de caoutchouc (2) la configuration de la face de la première extrémité (2a) et/ou la configuration de la face de l'autre extrémité (2b) de l'élément de caoutchouc non vulcanisé en forme de feuille, les configurations se croisant dans une direction longitudinale et à mettre en forme dans la direction longitudinale la configuration de la face de la première extrémité et/ou la configuration de la face de l'autre extrémité sur la base du résultat de la mesure.

5. Procédé selon la revendication 1, dans lequel l'étape de mise en forme dé faces d'extrémités comprend en outre les étapes consistant à tordre la face de la première extrémité (2a) et/ou la face de l'autre extrémité (2b) de l'élément de caoutchouc non vulcanisé en forme de feuille (2) dans la direction de la largeur par rapport à l'élément de caoutchouc non vulcanisé en forme de feuille, d'une quantité prédéterminée, sur la base du résultat de la mesure, et à déplacer une partie de la face de la première extrémité (2a) et/ou une partie de la face de l'autre extrémité (2b) dans la direction verticale par rapport au reste de la ou des parties d'extrémités, d'une quantité prédéterminée, sur la base du résultat de la mesure.

6. Procédé selon la revendication 1, dans lequel l'étape de coassemblage de faces d'extrémités est l'étape de mise en contact sous pression de faces d'extrémités consistant à déplacer des rouleaux de jonction (90, 90', 914, 91') tout en faisant tourner les rouleaux de jonction sur et le long de la partie de contact entre la face de la première extrémité (2a) et la face de l'autre extrémité (2b) dans l'état mis en butée et en amenant la face de la première extrémité en contact sous pression avec la face de l'autre extrémité.

7. Procédé selon la revendication 1, dans lequel l'étape de conjugaison des faces d'extrémités est une étape de fusion consistant à appliquer une onde ultrasonore à la partie de contact entre la face de la première extrémité (2a) et la face de l'autre extrémité (2b) dans l'état mis en butée et de faire en sorte que la partie de contact soit fondue.

8. Procédé selon la revendication 1, dans lequel l'étape de conjugaison de faces d'extrémités comprend : une étape de mise en contact sous pression de faces d'extrémités consistant à déplacer des rouleaux de jonction (90, 90', 91, 91') tout en faisant rouler les rouleaux de jonction sur et le long de la partie de contact entre la face de la première extrémité (2a) et la face de l'autre extrémité (2b) dans l'état mis en butée et en amenant la face de la première extrémité en contact sous pression avec la face de l'autre extrémité, et une étape de fusion consistant à appliquer une onde ultrasonore à la partie de contact sous pression entre la face de la première extrémité et la face de l'autre extrémité et à faire en sorte que la partie de contact soit fondue.

9. Procédé selon l'une quelconque des revendications 1 à 8, dans lequel la résistance à la traction du caoutchouc coassemblé est de 1,5 à 2,0 kgf.

10. Procédé selon l'une quelconque des revendications 1 à 8, dans lequel au moins l'une de l'étape de mise en forme de faces d'extrémités et de l'étape de coassemblage est exécutée sur un tambour de mise en forme (70).

11. Procédé selon l'une quelconque des revendications 1 à 8, dans lequel au moins l'une de l'étape de mise en forme de faces d'extrémités et de l'étape de conjugaison est exécutée dans une condition dans laquelle l'élément de caoutchouc non vulcanisé en forme de feuille (2) est en outre enroulé, d'une manière empilée, sur un autre élément de caoutchouc non vulcanisé en forme de feuille, qui a été enroulé sur un tambour de mise en forme (70).

12. Procédé selon la revendication 1, comprenant en outre :
une étape de mise en contact sous pression de faces d'extrémités consistant à déplacer un rouleau de jonction (90, 90', 91, 91') tout en faisant rouler les rouleaux de jonction sur et le long de la partie de contact entre la face de la première extrémité (2a) et la face de l'autre extrémité (2b) dans l'état mis en butée d'un élément de caoutchouc non vulcanisé en forme de feuille (2) et en amenant la face de la première extrémité en contact sous pression avec la face de l'autre extrémité, et
une étape de fusion destinée à faire fondre une partie de contact sous pression entre la face de la première extrémité et la face de l'autre extrémité en appliquant une onde ultrasonore à la partie de contact.

13. Appareil de fabrication de caoutchouc coassemblé comprenant :
un dispositif de mise en forme de faces d'extrémités (10) comportant un moyen de mesure destiné à mesurer la configuration de la face de la première extrémité (2a) d'un élément de caoutchouc non vulcanisé en forme de feuille (2), un moyen de mise en forme et un dispositif de coassemblage de faces d'extrémités (71) destiné à mettre mutuellement en butée la face de la première extrémité sur la face de l'autre extrémité à conjuguer, **caractérisé par** la mise en forme, sur la base du résultat de la mesure, de la configuration de la face de la première extrémité en une configuration de face d'extrémité dans laquelle son bord de bout correspond sensiblement à une ligne droite de référence (Y-Y), et la mise en forme de la face de l'autre extrémité (2b) en une configuration qui peut être mise en butée sur la configuration de la face de la première extrémité.

14. Appareil selon la revendication 13, dans lequel le dispositif de coassemblage de faces d'extrémités (71) est muni d'un dispositif de mise en contact sous pression de faces d'extrémités (71) qui amène la face de la première extrémité en contact sous pression avec la face de l'autre extrémité.

15. Appareil selon la revendication 14, dans lequel le dispositif de mise en contact sous pression de faces d'extrémités (71) est un rouleau de jonction (90, 90', 91, 91') qui se déplace tout en faisant rouler le dispositif de contact sur et le long de la partie de contact entre la face de la première extrémité (2a) et la face de l'autre extrémité (2b) dans l'état mis en butée, de manière à amener la face de la première extrémité en contact sous pression avec la face de l'autre extrémité.

16. Appareil selon la revendication 13, dans lequel le dispositif de coassemblage de faces d'extrémités (71) est muni d'un dispositif de fusion (100) destiné à faire fondre la partie de contact entre la face de la première extrémité (2a) et la face de l'autre extrémité (2b) dans l'état mis en butée.

17. Appareil selon la revendication 16, dans lequel le dispositif de fusion (100) est un dispositif de génération d'ondes ultrasonores (100) destiné à appliquer une onde ultrasonore à la partie de contact entre la face de la première extrémité (2a) et la face de l'autre extrémité (2b) dans l'état mis en butée, afin de faire fondre la partie de contact.

18. Appareil selon l'une quelconque des revendications 13 à 17, dans lequel le moyen de mesure comporte un capteur de déplacement (64, 64) ou un photocapteur (127).

19. Appareil selon l'une quelconque des revendications 13 à 17, dans lequel le moyen de mise en forme est capable d'exécuter une mise en forme en tordant la partie de la première extrémité (2a) et/ou la partie de l'autre extrémité (2b) de l'élément de caoutchouc non vulcanisé en forme de feuille (2) dans la direction de la largeur des faces d'extrémités par rapport à l'élément de caoutchouc non vulcanisé en forme de feuille, d'une quantité prédéterminée, sur la base du résultat de la mesure mesuré par le moyen de mesure, et est également capable de mettre en forme en déplaçant celui-ci d'une quantité prédéterminée dans une direction verticale par rapport à l'élément de caoutchouc non vulcanisé en forme de feuille, et
le moyen de mise en forme est muni d'un élément de pression (26, 53) qui est capable de fixer l'élément de caoutchouc non vulcanisé en forme de feuille et d'effectuer un mouvement vers le haut/vers le bas, une pluralité de plaques coulissantes (33) supportées dans la direction de la largeur le long de la face latérale de l'élément de pression, de sorte que la plaque coulissante puisse être déplacée vers le haut/vers le bas, et une pince de serrage (30) qui peut osciller et qui peut serrer l'élément de caoutchouc non vulcanisé en forme de feuille en collaboration avec la plaque coulissante.

20. Appareil selon l'une quelconque des revendications 13 à 17, comprenant en outre un tambour de mise en forme, et un moyen de serrage (132, 133) destiné à serrer la face de la première extrémité (2a) et/ou la face de l'autre extrémité (2b) de l'élément de caoutchouc non vulcanisé en forme de feuille (2) et à déplacer l'élément de caoutchouc sur le tambour de mise en forme.
